# EUROPEAN PATENT APPLICATION

(11) **EP 4 656 819 A1**
(43) Date of publication of application: **03.12.2025**
(21) Application number: 23918601.8
(22) Date of filing: 14.12.2023
(51) Int. Cl.: E04G 23/02, B05B 12/00, B05C 11/10, G06Q 50/08

(54) **INFORMATION PROCESSING DEVICE, INFORMATION PROCESSING METHOD, AND PROGRAM**

(30) Priority: 23.01.2023 JP 2023008344
(71) Applicant: Aster Co., Ltd., Tokyo 104-0061 (JP)
(72) Inventor: SUZUKI, Masaomi, Tokyo 104-0061 (JP); RAJASEKHARAN, Shanthanu, Tokyo 104-0061 (JP); YAMAMOTO, Kenjiro, Tokyo 104-0061 (JP)
(74) Representative: Plougmann Vingtoft a/s
(86) International application number: PCT/JP2023/044903
(87) International publication number: WO 2024/157646

(57) **Abstract**

An information processing apparatus 1 has a structure information acquiring part 131 that acquires building structure information indicating the structure of a building, and an output part 135 that outputs pattern information indicating one or more coating patterns indicating the coating area or coating thickness of a coating material for reinforcing the building indicated by the building structure information.

## Description

### TECHNICAL FIELD

The present disclosure relates to an information processing apparatus, an information processing method, and a program.

### BACKGROUND ART

Conventionally, a technique is known in which a fiber-reinforced coating is applied to plywood used as a building material for a wooden house to improve the seismic performance of the wooden house (for example, see Patent Document 1).

### PRIOR ART

### PATENT DOCUMENT

Patent Document 1: Japanese Unexamined Patent Application Publication No. 2019-105049

### SUMMARY OF INVENTION

### PROBLEMS TO BE SOLVED BY THE INVENTION

When a coating material for improving the seismic performance of a building is applied over a wide area, the cost of the coating material and the amount of work required increase. Accordingly, it is desirable to apply the coating material to an area where an improvement in seismic performance is expected.

The present disclosure focuses on this point, and an object thereof is to provide information for applying a coating material to an area where an improvement in seismic performance can be expected.

### MEANS FOR SOLVING THE PROBLEMS

An information processing apparatus according to a first aspect of the present disclosure includes a structure information acquiring part that acquires building structure information indicating a structure of a building, and an output part that outputs pattern information indicating one or more coating patterns indicating a coating area or a coating thickness of a coating material for reinforcing the building indicated by the building structure information.

The information processing apparatus may further include a pattern determining part that determines a plurality of coating patterns, each of which differs from others in at least one of the coating area or the coating thickness, wherein the output part may output the pattern information indicating at least one of the plurality of coating patterns, each determined based on analysis results of seismic performance of the building, the analysis being performed based on the building structure information and assuming that an earthquake with a predetermined earthquake intensity occurs in a state where a coating material has been applied to a coating area corresponding to each of the plurality of coating patterns.

The pattern determining part may determine the plurality of coating patterns having different combinations of the coating area and the coating thickness.

The pattern determining part may determine the plurality of coating patterns, each having a different combination of the coating area and the coating thickness at different positions in the height direction of the building.

The pattern determining part may determine the plurality of coating patterns having different combinations of the type of coating material, the coating area, and the coating thickness.

The pattern determining part may determine the plurality of coating patterns based on combinations of the coating areas and the coating thicknesses input by a user.

The structure information acquiring part may acquire image data indicating appearance of the building as the building structure information, and the pattern determining part may determine the plurality of coating patterns by determining the coating area based on the image data.

The output part may output the pattern information indicating the one or more coating patterns corresponding to the result indicating that the seismic performance of the building is equal to or greater than a reference level.

The information processing apparatus may further include an information acquiring part that acquires information indicating a region where the building is located, wherein the output part may output the pattern information indicating the coating pattern capable of achieving seismic performance equal to or greater than the reference level in a region indicated by the information acquired by the information acquiring part, by referring to data associating regions with reference levels.

The output part may further output information indicating an amount of coating material required for applying the coating material in a coating pattern corresponding to the pattern information to be output.

The information processing apparatus may further include an analysis part that selects either a continuum analysis method or a discontinuum analysis method based on an expected earthquake intensity and an estimated extent of damage to the building caused by the expected earthquake intensity, and analyzes an effect on the building using a selected analysis method. The analysis part may i) analyze seismic performance of the building as a continuum, when an earthquake with an intensity less than a predetermined intensity occurs and ii) analyze seismic performance of the building as a discontinuum, when an earthquake with an intensity equal to or greater than the predetermined intensity occurs.

The building may be a masonry building, and the analysis part may analyze an amount of displacement that occurs in a plurality of blocks constituting the building.

The information processing apparatus may further include an information acquiring part that acquires the type of tool used for applying a coating material, wherein the pattern determining part may determine the plurality of coating patterns including an overlapping coating area determined based on the type.

The information processing apparatus may further include an information acquiring part that acquires an acceptable cost level of a coating material to be used, wherein the pattern determining part may determine the number of overlapping applications or an overlapping coating area based on the acceptable level.

An information processing method, executed by a computer, according to a second aspect of the present disclosure includes the steps of acquiring building structure information indicating a structure of a building, and outputting pattern information indicating one or more coating patterns indicating a coating area or a coating thickness of a coating material for reinforcing the building indicated by the building structure information.

A program, according to a third aspect of the present disclosure, for causing a computer to function as a structure information acquiring part that acquires building structure information indicating a structure of a building, and an output part that outputs pattern information indicating one or more coating patterns indicating a coating area or a coating thickness of coating material for reinforcing the building indicated by the building structure information.

### EFFECT OF THE INVENTION

According to the present disclosure, it is possible to provide information for applying a coating material to an area where an improvement in seismic performance can be expected.

### BRIEF DESCRIPTION OF THE DRAWINGS

FIG. 1 is a diagram for explaining an overview of an information processing system S.
FIG. 2A shows a seismic performance of each coating pattern.
FIG. 2B shows the seismic performance of each coating pattern.
FIG. 3 shows detailed information of a coating pattern.
FIG. 4 shows an example of input information used by an information processing apparatus 1 to output a recommended coating pattern, and information output by the information processing apparatus 1.
FIG. 5 shows a configuration of the information processing apparatus 1.
FIG. 6 is a flowchart illustrating a process in the information processing apparatus 1.

### DESCRIPTION OF EMBODIMENTS

### [An overview of information processing system S]

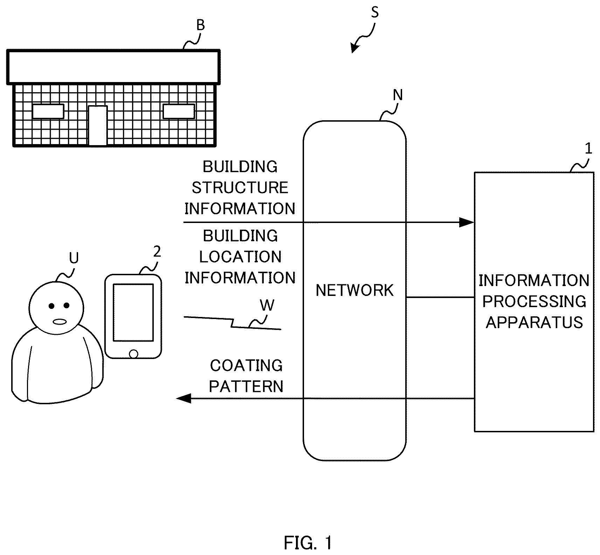

FIG. 1 is a diagram for explaining an overview of an information processing system S according to the present embodiment. The information processing system S is a system for providing information for applying a coating material to an area where an improvement in seismic performance of a building B can be expected. The information processing system S includes an information processing apparatus 1 and an information terminal 2.

The information processing apparatus 1 is a computer for providing the user U with information for applying a fiber-reinforced coating material to an area where the improvement in seismic performance of the building B can be expected, in accordance with an operation of the user U who uses the information terminal 2. The information processing apparatus 1 is a cloud server that can be accessed by the information terminal 2 used by the user U via a network N, for example, but a configuration of the information processing apparatus 1 is arbitrary. The user U is a representative of a contractor responsible for construction or renovation of the building B, for example. Alternatively, the user U may be an owner or resident of the building B, for example.

The information terminal 2 is a computer used by the user U, and is a tablet or a smartphone, for example, but a configuration of the information terminal 2 is arbitrary. The information terminal 2 is configured to communicate with the information processing apparatus 1 via a wireless communication line W and the network N, for example.

The overview of the information processing system S will be described with reference to FIG. 1 below. When the user U operates the information terminal 2 to launch application software for providing information regarding a recommended coating area or coating thickness, the information terminal 2 starts an operation to acquire the information regarding the coating area or the coating thickness from the information processing apparatus 1. When the information terminal 2 starts the operation, a screen for inputting information related to a building (hereinafter referred to as "building structure information") to which the coating material is to be applied for improving seismic performance is first displayed on the information terminal 2. When the user U inputs the building structure information to the information terminal 2, the information terminal 2 transmits the building structure information to the information processing apparatus 1.

As details of the building structure information will be described later, the building structure information is information indicating the structure of the building that is necessary for the information processing apparatus 1 to analyze the seismic performance of the building, and includes structural data indicating the structure of the building, such as the positions of openings and the types of masonry. The structure data is text data indicating the structure of the building, for example, but may be image data generated by the user U photographing the building with a camera, or design data of the building. The structure data may be data indicating a three-dimensional shape of the building generated by the user U using a tool such as a LiDAR scanner or a Time of Flight (ToF) sensor. The image data or design data includes data indicating the appearance of one or more wall surfaces of the building, for example.

The information terminal 2 transmits, to the information processing apparatus 1, building location information indicating a current position identified based on a radio wave received from a Global Positioning System (GPS) satellite, for example. The information terminal 2 may receive an input of the building location information indicating a region or a location where the building is located, and transmit the input building location information to the information processing apparatus 1. The building location information may be the latitude and longitude of the building, or may be a name of the region where the building is located. The information terminal 2 may display candidate names of the region where the building is located and generate the building location information indicating a region name selected by the user U.

The information processing apparatus 1 analyzes the seismic performance of the building based on the building structure information and the building location information. The information processing apparatus 1 simulates the direction and magnitude of forces applied to the building for each of a plurality of different coating patterns and for each earthquake intensity that may occur in the region where the building is located, using an analysis method such as i) a continuum analysis method, such as the Finite Element Method (FEM), or ii) a discontinuum analysis method, such as the Discrete Element Method (DEM) or the Applied Element Method (AEM), for example. The coating pattern is defined by the coating area, which indicates an area where the coating material is to be applied, and the coating thickness, which indicates the thickness of the coating material to be applied to each coating area. The coating thickness is, for example, a multiple of the smallest thickness that can be controlled (e.g., 0.25 mm).

The coating pattern may include the type of coating material. The type of coating material is represented by the proportion of fibers contained therein, for example. In this case, the type of coating material may be indicated as a 4% product, 8% product, or the like. In addition, the type of coating material may also be represented based on dilution details when a predetermined coating material is used in a diluted form (such as the type of thinner used and the dilution ratio). The dilution ratio refers to the ratio between the amount of the predetermined coating material before dilution and the amount of the thinner.

The application of the fiber-reinforced coating material to the building provides a damping effect that suppresses vibrations of the building, thereby improving the seismic performance of the building. Further, the seismic performance of the building can also be improved by applying the coating material with different coating thicknesses to different areas of the building, so that the building vibrates in different phases depending on the respective areas. The information processing apparatus 1 identifies a coating pattern that improves the seismic performance of the building by simulating the behavior of the building, with the coating material applied thereto, when an earthquake occurs in the region where the building is located.

The information processing apparatus 1 generates pattern information, based on the simulation result, indicating a combination of the coating area and the coating thickness that improves the strength of the building, and outputs the generated pattern information. Specifically, the information processing apparatus 1 transmits the pattern information to the information terminal 2, thereby causing the information terminal 2 to display a recommended coating area and coating thickness.

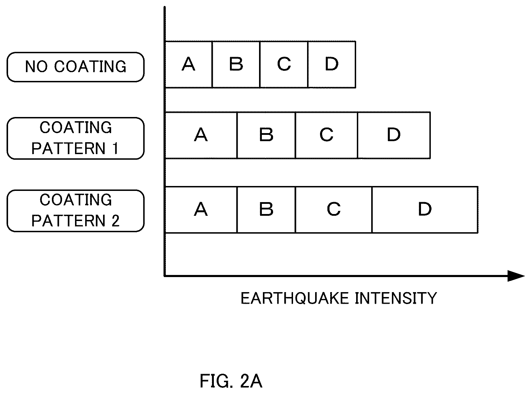

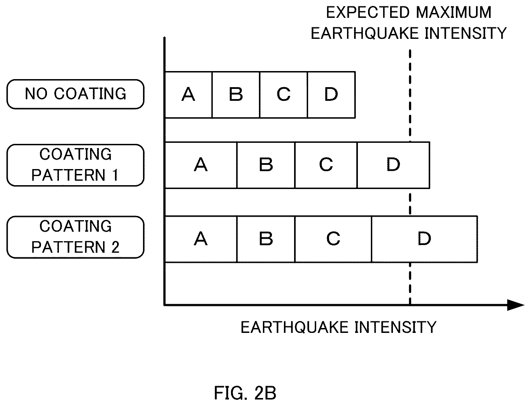

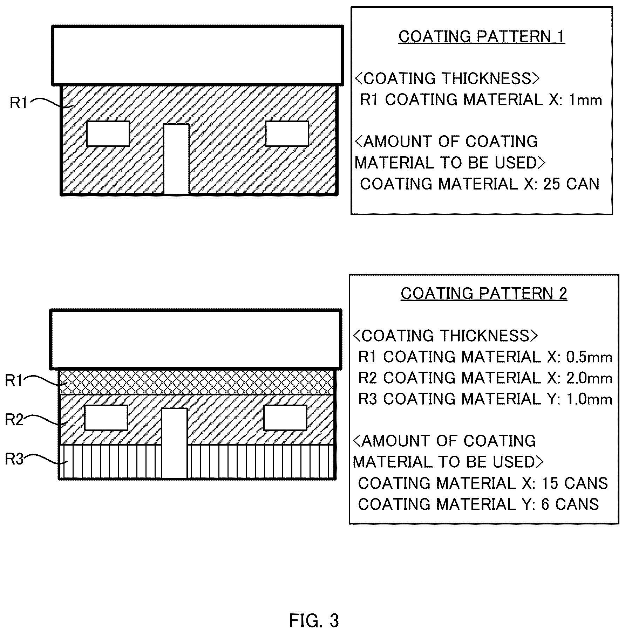

FIG. 2 and FIG. 3 show examples of the pattern information displayed on the information terminal 2. FIG. 2 shows the seismic performance for each coating pattern. Specifically, FIG. 2 shows a relationship between the earthquake intensity and the seismic performance of the building after application of the coating material, for each of a plurality of coating patterns. In FIG. 2, A indicates a normal state (Operational), B indicates an occupancy-permissible state (Immediate Occupancy), C indicates a state ensuring life safety (Life Safety), and D indicates a collapse prevention state (Collapse Prevention).

FIG. 2A illustrates that the seismic performance of the building is improved by applying the coating according to coating pattern 1 or coating pattern 2, as compared with the case where no coating is applied. Further, FIG. 2A illustrates that the seismic performance of the building is improved by applying the coating according to the coating pattern 2, as compared with the case where the coating according to the coating pattern 1 is applied. As shown in FIG. 2B, the information terminal 2 may further indicate the maximum earthquake intensity expected in the region where the building is located. The display of such information by the information terminal 2 enables the user U to more easily determine which coating pattern to adopt.

FIG. 3 shows detailed information of the coating pattern. For example, the information terminal 2 displays a detailed coating pattern, as shown in FIG. 3, in response to the user U performing an operation to display the details of the coating pattern. The information terminal 2 may display detailed information of the coating pattern 1, as shown in FIG. 3, in response to the user U pressing a "coating pattern 1" button shown in FIG. 2, and may display detailed information of the coating pattern 2, as shown in FIG. 3, in response to the user U pressing a "coating pattern 2" button.

As shown in FIG. 3, the detailed information of the coating pattern includes at least one of an image or text indicating an area to which the coating material is to be applied, and text indicating the coating thickness for each area. The detailed information may include information indicating the type of coating material (e.g., product name) to be used in each area. In addition, the detailed information may further include information indicating the amount of coating material to be used. Since these pieces of information are included in the detailed information, the user U can determine which coating pattern to adopt while also considering the budget.

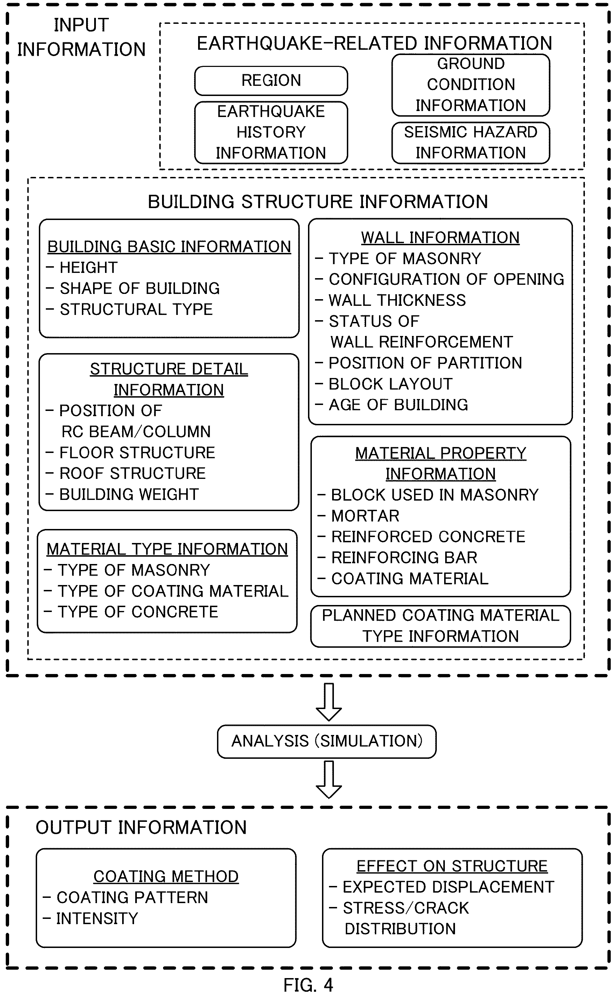

FIG. 4 shows an example of i) input information used by the information processing apparatus 1 to output a recommended coating pattern, and ii) information output by the information processing apparatus 1. The information processing apparatus 1 performs analysis using earthquake-related information and the building structure information as the input information, and outputs information indicating a recommended coating method and its effect on the structure. The information processing apparatus 1 outputs information indicating the recommended coating method and its effect on the structure, for example, in the manner shown in FIG. 2 and FIG. 3. In addition to the examples illustrated in FIG. 2 and FIG. 3, the information processing apparatus 1 may output an image indicating expected displacement of each part of the building, as well as distribution of stress and cracks.

The earthquake-related information includes at least one of i) information indicating the region where the building is located (hereinafter, referred to as "region information"), ii) information indicating the condition of the ground at the building location (hereinafter referred to as "ground condition information"), iii) information indicating a history of earthquake intensities, the seismic motion characteristics, and the like of past earthquakes in the region where the building is located, or iv) seismic hazard information indicating expected earthquake intensities, seismic motion characteristics, and the like of earthquakes that may occur in the region where the building is located. The information processing apparatus 1 acquires the region information from the information terminal 2. For example, the information processing apparatus 1 acquires at least one of the ground condition information, the earthquake-related information, or the seismic hazard information from an external computer. A storage medium of the information processing apparatus 1 may store at least one of the ground condition information, the earthquake-related information, or the seismic hazard information in advance.

The building structure information includes at least one of building basic information, structure detail information, wall information, material type information, material property information, or planned coating material type information. The building basic information is information indicating the height, the shape, the type of structure, and the like of the target building to be analyzed by the information processing apparatus 1. The structure detail information is information indicating positions of RC beams and columns, floor structure, roof structure, building weight, and the like. The wall information is information indicating the type of masonry, the configuration of openings (e.g., positions and sizes of openings), the wall thickness, the number of block layers forming the wall, the status of wall reinforcement, the positions of partition, the block layout (e.g., English bond, French bond, or header bond), the age of the building, and the like.

The material type information is information indicating the type of block used in the masonry (e.g., stone, brick, or concrete block), the type of coating material, and the type of concrete used, and the like. The material property information is information indicating material properties of masonry blocks, mortar, reinforced concrete, reinforcing bars, and coating material. The planned coating material type information is information indicating the type of coating material (e.g., product name) that the user U intends to use.

The information processing apparatus 1 acquires the building basic information out of the information included in the building structure information from the information terminal 2, for example. The information processing apparatus 1 may acquire the planned coating material type information and the wall information from the information terminal 2.

The information processing apparatus 1 may acquire the structure detail information, the material type information, and the material property information from an external computer. The storage medium of the information processing apparatus 1 may store the structure detail information, the material type information, and the material property information in advance. For example, the information processing apparatus 1 refers to a database to acquire i) information related to detailed structural features corresponding to the building height, shape, and structural type indicated by the basic building information or the wall information, ii) information related to material type, and iii) information related to material property, for example.

### [Configuration of information processing apparatus 1]

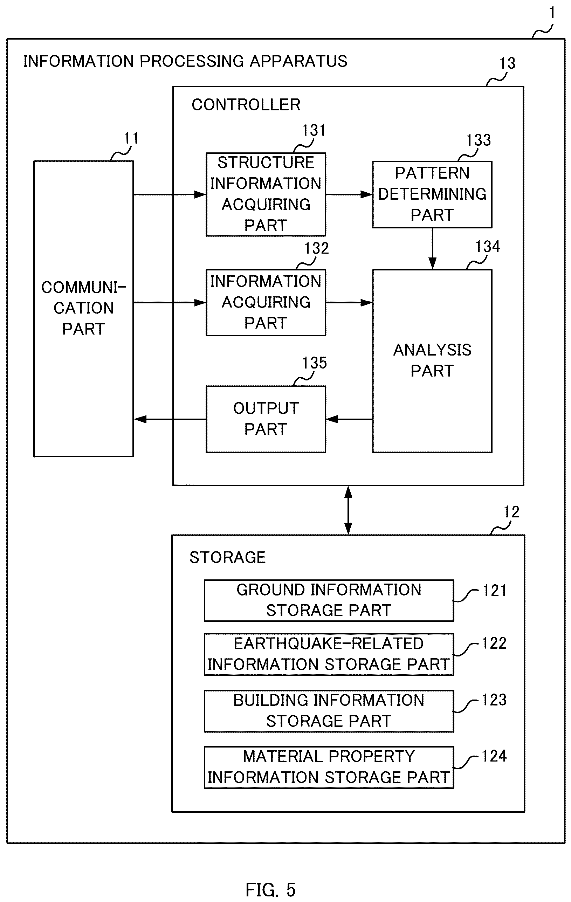

FIG. 5 shows a configuration of the information processing apparatus 1. The information processing apparatus 1 includes a communication part 11, a storage 12, and a controller 13. The storage 12 includes a ground information storage part 121, an earthquake-related information storage part 122, a building information storage part 123, and a material property information storage part 124. The controller 13 includes a structure information acquiring part 131, an information acquiring part 132, a pattern determining part 133, an analysis part 134, and an output part 135.

The communication part 11 is a communication interface for the information processing apparatus 1 to transmit and receive data to and from the information terminal 2. The communication part 11 inputs the building structure information received from the information terminal 2 to the structure information acquiring part 131. The communication part 11 inputs the building location information received from the information terminal 2 to the information acquiring part 132. The communication part 11 transmits the information indicating the coating pattern input from the output part 135 to the information terminal 2.

The storage 12 includes a storage medium such as a Read Only Memory (ROM), a Random Access Memory (RAM), a Solid State Drive (SSD), and the like. The storage 12 stores a program executed by the controller 13. In addition, the storage 12 stores various types of information used by the controller 13 to determine a recommended coating pattern.

The ground information storage part 121 stores ground information for each region. The ground information is information associating soil types with corresponding depths, for example.

The earthquake-related information storage part 122 stores at least one of ground condition information, earthquake history information, and seismic hazard information, in association with the region. The earthquake history information includes information such as the date of occurrence of the earthquake, the earthquake intensity, and the seismic motion characteristics.

The building information storage part 123 stores information on buildings. The information on buildings includes the building basic information, the structure detail information, the material type information, and the wall information shown in FIG. 4, for example.

The material property information storage part 124 stores information indicating the properties of various materials used in the building. The information indicating the material properties is the material property information shown in FIG. 4, for example.

The storage 12 may store other types of information. As one example, the storage 12 may associate and store a recommended coating pattern previously presented to the information terminal 2 of the user U or to the information terminal 2 of another user U with the structure of the building. This information is referred to when the pattern determining part 133 which will be described later determines the pattern.

The controller 13 includes a Central Processing Unit (CPU), for example. The controller 13 functions as the structure information acquiring part 131, the information acquiring part 132, the pattern determining part 133, the analysis part 134, and the output part 135 by executing the program stored in the storage 12.

The structure information acquiring part 131 acquires the building structure information indicating the structure of a building. The structure information acquiring part 131 may also acquire image data indicating the appearance of the building as the building structure information. The structure information acquiring part 131 may i) acquire identification information of the building from the information terminal 2 via the communication part 11, and ii) acquire the building structure information included in the building information stored in the building information storage part 123 in association with the acquired identification information. The structure information acquiring part 131 inputs the acquired building structure information to the pattern determining part 133.

The information acquiring part 132 acquires information indicating the region where the building is located. For example, the information acquiring part 132 acquires the building location information acquired from the information terminal 2 via the communication part 11 as the information indicating the region. The information acquiring part 132 may i) acquire the identification information of the building from the information terminal 2 via the communication part 11 and ii) acquire the building location information included in the building information stored in the building information storage part 123 in association with the acquired identification information as the information indicating the region. The information acquiring part 132 inputs the acquired information indicating the region to the analysis part 134.

The information acquiring part 132 may acquire various conditions set by the user U or a worker applying the coating material. The conditions set by the user U include a required level of the seismic performance or an acceptable cost level of the coating material, for example. The conditions set by the worker include the type of tool used for applying the coating material, the viscosity of the coating material to be used, or the required workability. The type of tool includes a roller, trowel, brush, spray, and the like. The information indicating the type of tool may include information related to the width over which the coating material can be applied by a single movement of the tool. Further, the information acquiring part 132 may acquire information indicating the priority order of various conditions affecting the coating pattern. These pieces of information are notified to the pattern determining part 133.

The pattern determining part 133 determines a plurality of coating patterns, each of which differs from the others in at least one of the coating area or the coating thickness of the coating material for reinforcing the building, indicated by the building structure information input from the structure information acquiring part 131. Specifically, the pattern determining part 133 determines a plurality of coating patterns having different combinations of coating areas and coating thicknesses. More specifically, the pattern determining part 133 determines a plurality of coating patterns, each having a different combination of the coating area and the coating thickness for wall surfaces at different positions in the height direction of the building. The pattern determining part 133 may determine a plurality of coating patterns, each having a different combination of the coating area and the coating thickness based on the distances from openings such as doors or windows. The plurality of coating patterns determined by the pattern determining part 133 are used by the analysis part 134 as information for analyzing the seismic performance of the building.

If the building structure information acquired by the structure information acquiring part 131 is image data indicating the appearance of building, the pattern determining part 133 may determine a plurality of coating patterns by determining the coating area based on the image data. As an example, the pattern determining part 133 determines a plurality of coating areas by dividing the building's height area into a) an area provided with a window and b) an area provided with no window, and determines a plurality of coating patterns each including different coating areas among the determined plurality of coating areas. The pattern determining part 133 may determine a plurality of coating areas based on information indicating a plurality of recommended coating areas stored in the storage 12 in advance in association with the shape and the masonry method of building, and determine a plurality of coating patterns each including different coating areas among the determined plurality of coating areas.

The pattern determining part 133 may determine a plurality of coating patterns, each having different combinations of types of coating material, coating areas, and coating thicknesses. In this case, the pattern determining part 133 determines a plurality of coating patterns by combining a plurality of types of coating materials, whose material properties are stored in the material property information storage part 124, with the coating areas and the coating thicknesses, for example. If an appropriate coating thickness is specified for each type of coating material, the pattern determining part 133 may select the type of coating material suitable for the coating thickness, or may select a coating thickness suitable for the type of coating material selected by the user U.

The pattern determining part 133 may determine a plurality of coating patterns based on combinations of the coating areas and the coating thicknesses input by the user U. As one example, the pattern determining part 133 provides the information terminal 2 with information indicating a number of coating patterns that have been temporarily determined via the output part 135, and determines, as a plurality of coating patterns to be analyzed by the analysis part 134 for analyzing the seismic performance of the building, a plurality of coating patterns selected by the user U via the information terminal 2. When the pattern determining part 133 operates in this manner, the analysis part 134 analyzes the seismic performance of the building with a plurality of coating patterns feasible for the user U, thereby increasing the probability that the information processing apparatus 1 can provide useful information to the user U.

The pattern determining part 133 may preferentially select a coating pattern that has been previously analyzed for a building with a structure similar to that of the target building to be analyzed by the analysis part 134, and that demonstrated favorable seismic performance. The building with a structure similar to that of the target building to be analyzed by the analysis part 134 refers to a building in which a predetermined number or more of elements included in the building basic information, structure detail information, and wall information match those of the target building to be analyzed. By selecting the coating pattern in this manner, the pattern determining part 133 can reduce the number of coating patterns to be analyzed by the analysis part 134, thereby shortening the processing time.

The pattern determining part 133 may determine a plurality of coating patterns including an overlapping coating area where the coating material is applied a plurality of times to the same position. When the coating material is applied to the same position in an overlapping manner, the coating thickness increases, and thus the seismic performance of the building improves. The pattern determining part 133 determines, for example, a plurality of coating patterns including the overlapping coating area determined based on the type of tool acquired by the information acquiring part 132.

Specifically, when the tool is a roller, trowel, brush, or spray, the pattern determining part 133 determines a coating pattern that includes, as the overlapping coating area, a quadrilateral area having a side length that is an integer multiple of the width over which the coating material is applied in a single movement of the tool (e.g., a roller width, a trowel length, a brush width, or a spray coverage area). The pattern determining part 133 may determine a coating pattern that includes, as the overlapping coating area, a quadrilateral area having a side length that is an integer multiple of half the width over which the coating material is applied. Since the overlapping coating area is defined in this manner, it becomes easier for the worker to apply the coating material a plurality of times to the designated overlapping coating area without using any special measuring devices.

It should be noted that when the tool is a spray, the coating thickness varies depending on the discharge rate of the spray, the travel speed of a spray gun, or the distance between the spray and the wall. Accordingly, the pattern determining part 133 may determine a coating pattern that includes information regarding at least one of the discharge rate of the spray, the travel speed of the spray gun, or the distance between the spray and the wall. For example, the pattern determining part 133 may i) determine a coating pattern including information related to any one of the discharge rate of the spray, the travel speed of the spray gun, or the distance between the spray and the wall, or ii) determine a coating pattern including information related to two or more selected from the discharge rate of the spray, the travel speed of the spray gun, or the distance between the spray and the wall.

The pattern determining part 133 may determine a coating pattern that indicates the number of coating applications for each area. The thickness of the coating material applied in a single application varies depending on the viscosity of the coating material. Therefore, the pattern determining part 133 determines a coating pattern in which the number of coating applications decreases as the viscosity of the coating material set by the worker increases. The pattern determining part 133 may determine a plurality of coating patterns that differ in combinations of the type (e.g., viscosity) of coating material and the number of coating applications, based on the workability set by the worker.

When the number of coating applications to the same area increases, the cost increases due to the increase in the amount of the coating material used. Accordingly, the pattern determining part 133 may determine at least one of the number of overlapping coating applications or the overlapping coating area based on the acceptable cost level of the coating material set by the user U. The pattern determining part 133 increases the number of coating applications or the overlapping coating area as the acceptable cost level increases.

The pattern determining part 133 may determine a plurality of coating patterns based on the required level of the seismic performance set by the user. For example, as the required level of the seismic performance is greater, the pattern determining part 133 widens the coating area of the coating material, increases the coating thickness, increases the number of overlapping coating applications, or the overlapping coating area.

The seismic performance, workability, and cost are in a trade-off relationship with each other. Therefore, the pattern determining part 133 may determine a coating pattern that satisfies a condition having a higher priority, based on the priority order set by the user U. For example, if the priority of the seismic performance is high, the pattern determining part 133 increases the coating thickness or the overlapping coating area. If the priority of cost or workability is high, the pattern determining part 133 reduces the coating thickness or the overlapping coating area.

The analysis part 134 analyzes the seismic performance of the building after the coating material is applied according to each of the plurality of coating patterns determined by the pattern determining part 133. The analysis part 134 identifies a region where the building is located based on the building location information acquired from the information acquiring part 132, and analyzes the seismic performance of the building against the earthquake intensity expected to occur in the region, which is identified by referring to the earthquake-related information storage part 122. In a case where the building has a masonry structure composed of a plurality of stacked blocks, the analysis part 134 analyzes the seismic performance of the building by analyzing the amount of displacement that may occur in the plurality of blocks constituting the building when an earthquake assumed to occur in the region where the building is located. The analysis part 134 determines the seismic performance level of the building based on the number of blocks in which the amount of displacement is equal to or exceeds a reference value.

The analysis part 134 analyzes an effect on the building for each expected earthquake intensity that may occur in the region where the building is located, using numerical analysis methods such as the Finite Element Method, Discrete Element Method, or Applied Element Method, for example. The analysis part 134 selects either a continuum analysis method or a discontinuum analysis method based on, for example, an expected earthquake intensity and an estimated extent of damage to the building caused by the expected earthquake intensity, and analyzes the effect on the building using the selected analysis method. The analysis part 134 refers to the ground information storage part 121 to identify the ground condition in the region where the building is located, and analyzes the effect on the building in consideration of the identified ground condition.

For example, the analysis part 134 i) analyzes the seismic performance of the building using the continuum analysis method when only minor structural damage is expected due to an earthquake, and ii) analyzes the seismic performance of the building using the discontinuum analysis method when significant structural damage is expected due to a predetermined earthquake. Specifically, when an earthquake with a seismic intensity level of less than 3 occurs, the analysis part 134 assumes that the building will sustain only minor damage, and analyzes the building as a continuum using the Finite Element Method. On the other hand, when an earthquake with a seismic intensity level of 6 or more occurs, the analysis part 134 assumes that the building will sustain significant damage, including cracking or structural failure, and analyzes the building as a discontinuum using the Discrete Element Method. When an earthquake with a seismic intensity level of 3 or more and less than 6 occurs, the analysis part 134 analyzes the earthquake using both the Finite Element Method and the Discrete Element Method, for example.

That is, when the earthquake intensity to be analyzed is low, it is desirable to perform an analysis focusing on the prevention of cracking and damage to structural members, and thus the Finite Element Method suitable for calculation of such analysis is preferable. On the other hand, when the earthquake intensity to be analyzed is high, it is desirable to perform an analysis focusing on failure of structural members or collapse of walls or the entire building, and thus the Finite Element Method suitable for calculation of such analysis is preferable.

In addition, the analysis part 134 may be configured to i) apply at least two analysis methods (including, but is not limited to, the Discrete Element Method and the Finite Element Method), and ii) apply an analysis method that is suitable for each case, depending on whether the analysis focuses on the prevention of cracking and damage to structural members or on the failure of structural members and the collapse of walls or the entire building, from the standpoint of calculation accuracy, calculation speed, or both. As described above, by changing the analysis method according to the earthquake intensity to be analyzed, it is possible to improve analysis accuracy, calculation speed, or both in each of the earthquake intensity ranges. The analysis part 134 may further improve the analysis accuracy by combining the Discrete Element Method and the Finite Element Method.

The analysis part 134 generates analysis result information indicating which part of the building will develop cracks and which part will be damaged, based on results of such an analysis. The analysis part 134 generates the analysis result information associating the coating pattern, the earthquake intensity, and the state of the building after the earthquake with each other. The analysis part 134 inputs the generated analysis result information to the output part 135.

The output part 135 outputs pattern information indicating the coating pattern recommended to the user U based on the analysis result information input from the analysis part 134. Specifically, the output part 135 outputs pattern information indicating at least one of a plurality of coating patterns, each of which is determined based on an analysis result of the seismic performance of the building, the analysis being performed based on the building structure information and assuming that an earthquake with a predetermined earthquake intensity occurs in a state where the coating material has been applied to the coating area corresponding to each of the plurality of coating patterns, as shown in FIG. 2 and FIG. 3. Specifically, the output part 135 outputs pattern information indicating the coating area, the type of coating material to be applied in each coating area, and the coating thickness of each coating area.

The output part 135 transmits the pattern information, the earthquake intensity, and the information indicating the state of the building after the earthquake to the information terminal 2 via the communication part 11, thereby displaying a screen on the information terminal 2 as shown in FIG. 2 and FIG. 3. When the user U views such a screen, the user U can determine in which area and to what thickness the coating material should be applied.

The output part 135 may output pattern information indicating one or more coating patterns corresponding to a result indicating that the seismic performance of the building is equal to or higher than a reference level. The reference level is a level set by the user U (i.e., a level corresponding to a required seismic performance level), for example, but may be a level that is predetermined and stored in the storage 12.

The reference level may include a plurality of reference levels corresponding to a plurality of different earthquake intensities. Specifically, the reference level may include a plurality of reference levels, such as i) maintaining an occupancy-permissible state (Immediate Occupancy) in response to relatively small earthquakes that occur once every five years, and ii) maintaining a collapse prevention state (Collapse Prevention) in response to relatively large earthquakes that occur once every hundred years. In this case, the output part 135 may output pattern information indicating one or more coating patterns that correspond to a result in which the seismic performance level is equal to or greater than a reference level satisfying a condition set by the user U, for example.

The reference level may be defined for each part of the building. In this case, the output part 135 outputs pattern information indicating a coating pattern in which the condition of each part of the building after an earthquake meets or exceeds a reference level corresponding to the respective part. The output part 135 operates in this manner, and so the user U can easily grasp the coating pattern that enables each part of the building to maintain a favorable condition even after an earthquake.

The output part 135 may output pattern information indicating a coating pattern that can achieve seismic performance equal to or greater than a reference level corresponding to the region indicated by the information acquired by the information acquiring part 132, by referring to data that associates regions with reference levels. The output part 135 may output pattern information indicating a coating pattern that can achieve seismic performance equal to or greater than a reference level associated with a combination of a region and a building part. Since the output part 135 operates based on the reference level associated with the region in this manner, the user U is allowed to identify an appropriate coating pattern for the region where the building is located, even if the user U is not aware of the expected seismic intensity or the required seismic performance for the region where the building is located.

Since the coating pattern includes the coating area and the coating thickness, the amount of coating material required for application based on the coating pattern is uniquely determined as the product of the coating area and the coating thickness. Therefore, the output part 135 may further output information indicating the amount of coating material required for application based on the coating pattern corresponding to the output pattern information. The output part 135 may further output cost information for each coating material by calculating the product of the amount of coating material by its corresponding unit price. Since the output part 135 outputs information indicating the required amount of coating material, the user U can more easily determine which coating pattern to adopt, considering both the seismic performance and the budget.

### [Process in the information processing apparatus 1]

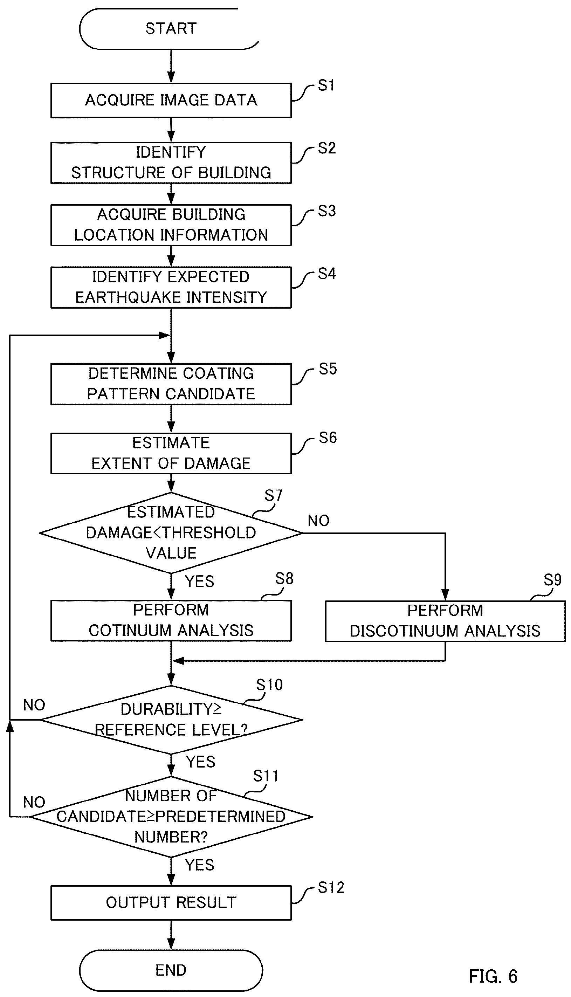

FIG. 6 is a flowchart illustrating a process in the information processing apparatus 1. The flowchart illustrating a process in the information processing apparatus 1 starts when the user U launches application software in the information terminal 2 for determining the coating pattern. In the example shown in FIG. 6, the image data generated by photographing the building by the user U is assumed to be used as the building structure information of the building.

First, the structure information acquiring part 131 acquires the image data transmitted from the information terminal 2 via the communication part 11 (S1). The pattern determining part 133 identifies the structure of the building based on the image data acquired by the structure information acquiring part 131 (S2).

The information acquiring part 132 acquires the building location information transmitted from the information terminal 2 via the communication part 11 (S3). By referring to the ground information storage part 121 and the earthquake-related information storage part 122, the analysis part 134 identifies the earthquake intensity expected for the region indicated by the building location information acquired by the structure information acquiring part 131 (S4). The order of steps S2 and S4 is arbitrary.

Subsequently, the pattern determining part 133 determines a coating pattern candidate based on the identified structure of the building (S5). The pattern determining part 133 notifies the analysis part 134 of the determined coating pattern.

The analysis part 134 estimates the extent of damage to the building when an earthquake with the intensity identified in S4 occurs in the region where the building, applied with the coating material in the notified coating pattern, is located (S6). If the extent of damage estimated to occur in the structure of the target building to be analyzed is less than a threshold value (YES in S7), the analysis part 134 analyzes the seismic performance of the building using the continuum analysis method such as the Finite Element Method (S8). If the extent of the damage estimated to occur in the structure of the target building to be analyzed is equal to or larger than the threshold value (NO in S7), the analysis part 134 analyzes the seismic performance of the building using the discontinuum analysis method such as the Discrete Element Method (S9).

If it is determined that the durability (i.e., the seismic performance) of the building, as indicated by the analysis result, is lower than the reference level required in the region where the building is located (NO in S10), the analysis part 134 returns to S5 and analyzes the seismic performance of the building for another coating pattern. If it is determined that the seismic performance of the building, as indicated by the analysis result, is equal to or greater than the reference level required in the region where the building is located (YES in S10), the analysis part 134 determines whether the number of candidate coating patterns that satisfies the reference level has reached or exceeded, for example, a number desired by the user U (S11).

If it is determined that the number of candidate coating patterns that satisfies the reference level has reached or exceeded a predetermined number (YES in S11), the output part 135 outputs the analysis results as shown in FIG. 2 and FIG. 3 (S12).

It should be noted that, when outputting a plurality of analysis results, an indication such as "high durability" may be added to an analysis result that is superior to other analysis results in terms of durability, or an indication such as "less coating material used" or "lower coating material cost" may be added to an analysis result that is superior to other analysis results in terms of the amount of coating material used or coating material cost, so that each analysis result may be displayed with content indicating its features (such as those in comparison with other analysis results).

In addition, when outputting a plurality of analysis results, the display order may be sorted based on durability, so that items with higher durability are displayed in descending order from the top, or the display order may be sorted based on the amount of coating material used or coating material cost, so that items with the smaller amount coating material used or lower coating material cost are displayed in descending order from the top. Further, the display order of these items may be preset, for example via input from the information terminal 2, in accordance with the preferences of the user U (e.g., whether durability is particularly prioritized, or whether the amount or cost of coating material is particularly prioritized).

If it is determined that the number of candidate coating patterns that satisfies the reference level has not reached or exceed the predetermined number (NO in S11), the output part 135 returns to S5 and analyzes the seismic performance of the building for another coating pattern. The predetermined number is a number that is input by the user U to the information terminal 2 and notified from the information terminal 2 to the information processing apparatus 1, for example, but may be a number that is previously stored in the storage 12.

### [Modified example]

In the above description, the information processing system S includes the information processing apparatus 1 and the information terminal 2, and the information processing apparatus 1 provides the information terminal 2 with the information for applying the coating material to the area where the improvement in seismic performance of the building is expected, but the configuration of the information processing system S is not limited thereto. The information terminal 2 may incorporate the function of the information processing apparatus 1, and may be configured to operate independently to display information for applying the coating material to an area where improvement in seismic performance of the building is expected.

Further, in the "coating pattern 2" of FIG. 3 described above, the areas R1 to R3 are shown as being distinct and non-overlapping, but alternatively, boundary portions of the areas R1 to R3 may be shown as partially overlapping. By applying the coating so that the boundary portions of the areas R1 to R3 partially overlap, resistance to seismic stress at the boundary portions can be further improved.

Furthermore, instead of the above-described method that the boundary portions of the areas R1 to R3 partially overlap, the boundary portions of the areas R1 to R3 may be coated with gradation. Since the application of the coating material to the building may not be completed in a single operation, for example, at the boundary portion between the area R2 and the area R3 in "coating pattern 2" shown in FIG. 3, under the assumption that four applications are required to complete the coating in both the area R2 and the area R3, a gradient coating may be applied from the area R2 toward the area R3 through a series of intermediate areas defined as follows: (1) an area (the area R2) where a coating material X is applied four times, (2) an area where the coating material X is applied three times and a coating material Y is applied once, (3) an area where the coating material X is applied twice and the coating material Y is applied twice, (4) an area where the coating material X is applied once and the coating material Y is applied three times, and (5) an area (the area R3) where the coating material Y is applied four times.

Moreover, information indicating which surface of the building is to be coated may be added to the input to the information processing apparatus 1 (either as part of the building structure information and building location information or in addition to these pieces of information). For example, if the building has four surfaces, namely east, west, south, and north, and the north surface is too close to an adjacent building to be coated, the coating may be applied only to the remaining three surfaces: east, west, and south. In order to accommodate such a case, information indicating which surface of the building is to be coated may be included in the input to the above-mentioned information processing apparatus 1.

Further, the above-mentioned earthquake-related information may include information that can be set by the user U. For example, by using an earthquake intensity set by the user U (such as by setting a seismic grade), instead of the intensity of a past earthquake, a coating pattern corresponding to the user's seismic requirements may be presented.

### [Effects of information processing apparatus 1]

As described above, the pattern determining part 133 determines, based on the building structure information, a plurality of coating patterns, each of which differs from the others in at least one of the coating area and the coating thickness of the coating material for reinforcing the building. Then, the analysis part 134 analyzes the seismic performance of the building based on the building structure information, assuming that an earthquake with a predetermined intensity occurs while the coating material is applied to the coating area corresponding to each of the plurality of coating patterns.

The output part 135 outputs, to the information terminal 2, the pattern information indicating the coating pattern in which the seismic performance is equal to or greater than the reference level, based on the analysis result. By operating in this manner, the information processing apparatus 1 allows the user U to identify the coating area and coating thickness that achieve a sufficient level of seismic performance of the building, thereby enabling appropriate application of the coating material to improve the seismic performance of the building.

It should be noted that, in the above-described embodiment, the information processing apparatus 1 acquires the building structure information and determines the coating area and the coating thickness of the coating material based on the building structure information, but the method by which the coating area and the coating thickness are determined is not limited thereto. As described above, the information processing apparatus 1 may determine at least one of the coating area or the coating thickness of coating material, without using the building structure information, based on at least one condition set by the user U or the worker, the condition being selected from: an acceptable cost level, the type of tool used for applying the coating material, the viscosity of the coating material, and the required workability. In addition, the information processing apparatus 1 may determine the coating area and the coating thickness so that the condition having a relatively high priority, as set by the user U or the worker, is satisfied among these conditions that may be in a trade-off relationship.

When the information processing apparatus 1 determines at least one of the coating area or the coating thickness based on such information, it becomes possible to address the issue where the coating area and coating thickness are determined based on the experience and intuition of the worker, which may otherwise result in failure to achieve the cost expected by the user U or in an unnecessarily increased work time.

The present disclosure is explained on the basis of the exemplary embodiments. The technical scope of the present disclosure is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments of the present disclosure. Further, effects of the new exemplary embodiments brought by the combinations also have the effects of the original exemplary embodiments.

### [Description of Symbols]

1: information processing apparatus
2: information terminal
11: communication part
12: storage
13: controller
121: ground information storage part
122: earthquake-related information storage part
123: building information storage part
124: material property information storage part
131: structure information acquiring part
132: information acquiring part
133: pattern determining part
134: analysis part
135: output part

## Claims

1. An information processing apparatus comprising:
a structure information acquiring part that acquires building structure information indicating a structure of a building; and
an output part that outputs pattern information indicating one or more coating patterns indicating a coating area or a coating thickness of a coating material for reinforcing the building indicated by the building structure information.

2. The information processing apparatus according to claim 1, further comprising:
a pattern determining part that determines a plurality of coating patterns, each of which differs from others in at least one of the coating area or the coating thickness, wherein
the output part outputs the pattern information indicating at least one of the plurality of coating patterns, each determined based on analysis results of seismic performance of the building, the analysis being performed based on the building structure information and assuming that an earthquake with a predetermined earthquake intensity occurs in a state where a coating material has been applied to a coating area corresponding to each of the plurality of coating patterns.

3. The information processing apparatus according to claim 2, wherein
the pattern determining part determines the plurality of coating patterns having different combinations of the coating area and the coating thickness.

4. The information processing apparatus according to claim 3, wherein
the pattern determining part determines the plurality of coating patterns, each having a different combination of the coating area and the coating thickness at different positions in the height direction of the building.

5. The information processing apparatus according to claim 3, wherein
the pattern determining part determines the plurality of coating patterns having different combinations of the type of coating material, the coating area, and the coating thickness.

6. The information processing apparatus according to claim 3, wherein
the pattern determining part determines the plurality of coating patterns based on combinations of the coating areas and the coating thicknesses input by a user.

7. The information processing apparatus according to claim 2, wherein
the structure information acquiring part acquires image data indicating appearance of the building as the building structure information, and
the pattern determining part determines the plurality of coating patterns by determining the coating area based on the image data.

8. The information processing apparatus according to claim 2, wherein
the output part outputs the pattern information indicating the one or more coating patterns corresponding to the result indicating that the seismic performance of the building is equal to or greater than a reference level.

9. The information processing apparatus according to any one of claims 1 to 7, further comprising:
an information acquiring part that acquires information indicating a region where the building is located, wherein
the output part outputs the pattern information indicating the coating pattern capable of achieving seismic performance equal to or greater than the reference level in a region indicated by the information acquired by the information acquiring part, by referring to data associating regions with reference levels.

10. The information processing apparatus according to any one of claims 1 to 7, wherein
the output part further outputs information indicating an amount of coating material required for applying the coating material in a coating pattern corresponding to the pattern information to be output.

11. The information processing apparatus according to any one of claims 1 to 7, further comprising:
an analysis part that selects either a continuum analysis method or a discontinuum analysis method based on an expected earthquake intensity and an estimated extent of damage to the building caused by the expected earthquake intensity, and analyzes an effect on the building using a selected analysis method.

12. The information processing apparatus according to claim 11, wherein
the analysis part i) analyzes seismic performance of the building as a continuum, when an earthquake with an intensity less than a predetermined intensity occurs and ii) analyzes seismic performance of the building as a discontinuum, when an earthquake with an intensity equal to or greater than the predetermined intensity occurs.

13. The information processing apparatus according to claim 11, wherein
the building is a masonry building, and
the analysis part analyzes an amount of displacement that occurs in a plurality of blocks constituting the building.

14. The information processing apparatus according to claim 2, further comprising:
an information acquiring part that acquires the type of tool used for applying a coating material, wherein
the pattern determining part determines the plurality of coating patterns including an overlapping coating area determined based on the type.

15. The information processing apparatus according to claim 2, further comprising:
an information acquiring part that acquires an acceptable cost level of a coating material to be used, wherein
the pattern determining part determines the number of overlapping applications or an overlapping coating area based on the acceptable level.

16. An information processing method, executed by a computer, comprising the steps of:
acquiring building structure information indicating a structure of a building; and
outputting pattern information indicating one or more coating patterns indicating a coating area or a coating thickness of a coating material for reinforcing the building indicated by the building structure information.

17. A program for causing a computer to function as:
a structure information acquiring part that acquires building structure information indicating a structure of a building; and
an output part that outputs pattern information indicating one or more coating patterns indicating a coating area or a coating thickness of coating material for reinforcing the building indicated by the building structure information.
